# EUROPEAN PATENT APPLICATION

(11) **EP 1 324 237 A1**
(43) Date of publication of application: **02.07.2003**
(21) Application number: 01403389.8
(22) Date of filing: 28.12.2001
(51) Int. Cl.: G06F 17/60

(54) **Selecting and communicating offers of services or products in response to an interrogation**

(71) Applicant: MOTOROLA, INC., Schaumburg, IL 60196 (US)
(72) Inventor: Gouaich, Abdelkader, MOTOROLA, Centre de Recherche, 91193 Gif Sur Yvette Cedex (FR); Camuzard, Fréderic, 75014 Paris (FR); Charlton, Patricia, MOTOROLA Centre de Recherche, 91193 Gif sur Yvette Cedex (FR)
(74) Representative: Wharmby, Martin Angus

(57) **Abstract**

A method of, and apparatus for, selecting and communicating offers of services or products (Service1 to Service18, S1 to S5) in response to an interrogation in which data defining each of the offers is registered at at least one of a plurality of nodes (5 to 21) that are linked by a communication network (29, 30, 31). An interrogation message defining criteria for selection of the desired services or products is transmitted from a user station (4) over the network (29, 30, 31) to the nodes (5 to 21), responses of the nodes are filtered to select relevant offers matching at least partially the defined criteria for selection of the desired services or products and information concerning selected responses are transmitted to the user station.

In accordance with the invention, each of the nodes (5 to 21) filters any local offers that are registered at that node to select relevant local offers (LocalMin) matching at least partially the defined criteria for selection of the desired services or products, transmits selection result messages (FurtherMin) to second ones of the nodes (5 to 21) and receives selection result messages (FurtherMin) from third ones of the nodes (5 to 21), the selection result messages (FurtherMin) concerning the selection between any selected local offers and any further offers selected by the third nodes. The selection result message transmitted to the second nodes for each pair of nodes that are in direct communication comprises information (LinkMin) concerning the value and identity of the offer or offers selected between the local offers and the further offers from that pair of nodes. The invention is particularly applicable to methods that are compliant with the FIPA specifications.

## Description

### Field of the invention

This invention relates to selecting and communicating offers of services or products in response to an interrogation.

### Background of the invention

The Internet with browser access is a current, relatively primitive, network infrastructure enabling service access to electronic commerce. Offers of services or products appear in proprietary web sites on the Internet. This gives wide possibilities of information but finding and accessing the relevant web sites manually is fastidious.

In order to address the problem of searching, various search engines exist, for example the search engines called 'Yahoo' and 'Google'. Search engines are web sites containing a database to which providers of services and products can subscribe. Usually such search engines make use of key word searching of the entries in the database of the search engine and produce a universal re-source locator (URL) that re-directs the enquiry to another web site. They facilitate the tasks of searching but actually often lead to an overload of information; also such systems rely on the central database of the search engine, fed by information from other sites contacted in real-time.

Another example of searching for offers of products and services is the 'Yellow Pages' classified directory on the Internet, whose central database may be searched by broad category of product/service and geographical area. Suppliers have to subscribe in advance and be entered in the central database, however, and the searching criteria are limited. The search process is essentially manual, that is to say that the user selects categories and geographical areas in pull-down lists and receives a display of corresponding pre-determined responses, such as the name, postal and e-mail addresses, telephone numbers, as well possibly as more detailed advertisements, which may contain Internet links to subscribers' own web-sites.

Patent specification N° WO0041090 describes an Internet-based search engine having a geographically coded search engine database knowledge store with filters using some preferences set by the user. The geographically coded search engine database allows a user to include geographical limitations when requesting a search by the search engine, thus limiting the number of search results to those that are geographically most relevant to the user. For example, the user may search for "video store" by typing in his or her postal ('zip') code. The search engine may sort the pages returned with video stores closest to the user's location displayed first.

Patent specification N° WO0041090 states that the Internet search engine described therein may allow a user to locate all businesses within a certain driving distance that sell a particular item. For example, a user may search for all music stores within 10 miles that sell the new compact disk by a particular artist. The search engine first locates the local business that sells music within the specified distance from the person executing the query. Next, the search engine locates the web page associated with the business and checks the inventory to determine whether the CD is in stock and at what price and the user would be presented with a list of local stores having the merchandise as well as the price, driving distance, phone/fax numbers, and store hours.

Patent specification N° WO0041090 also proposes that, in order to generate and/or update the search engine database, the Internet spider may automatically or semi-automatically search through a plurality of web sites for locator information and may send e-mails to various web sites requesting additional information; the search engine database may be generated and/or updated using data from an existing database. The web site addresses may also be determined by automatically and methodically searching through an existing search engine such as Yahoo to determine which web sites exist on the Internet.

While this system enables information to be gathered and presented from a variety of sources, it still poses problems of up-dating the databases and requires maintenance of web sites and contacts with, and/or responses by, all possible providers that are within the selected area but do not already have sufficient data in the accessible databases.

Patent specification WO0039729 describes a method of conducting an interactive reverse auction (where a potential purchaser requests offers of goods or services from competing potential suppliers) over a computer network. Reverse auctions have traditionally taken the form of the distribution of documents such as a Request for Information, Request for Quotation, Request for Proposal, and/or a Specification to entities that may have an interest in bidding to provide goods and services at a competitive price. In contrast with the typical "forward" auction (where goods or services are offered for sale), the dimensions for selecting a winning bidder are typically not just best price, but include a variety of additional dimensions, such as the brand and quality of the merchandise proposed, the timeliness of delivery, and the quality of service.

The reverse auction information and processing system described in patent specification WO0039729 comprises a computer network enabling communication between a host computer and a plurality of remote computers including a request and/or specification database in communication with the auction host computer system for storing information about requests and/or specifications, such information being descriptive of a request and/or specification of goods and services to be purchased, a bid database in communication with the auction host computer system for storing information about responses to requests and/or specifications, such bids including financial information, a description of the goods and services to be provided, information about the bidder including one or more pointers to bidder addresses such as an email address and a World Wide Web address, a reverse auction engine in communication with the request database and the bid database, and a security manager that allows requestors to designate whether a request shall be generally available and to designate the parties who shall have access to bid on it.

Selection of the offers is therefore made by the auction host computer system on the basis of information entered into and stored in the central bid database. The questions of dynamic changes in service offers and multiple user contexts are not addressed. Contacts with all possible providers of products/services are required.

### Summary of the invention

The present invention provides a method of, and a system for, selecting and communicating offers of services or products in response to an interrogation as described in the accompanying claims. The invention is particularly, but not exclusively, applicable to systems and methods compliant with the specifications of the Foundation for Intelligent Physical Agents ("FIPA") and the Agentcities project.

### Brief description of the drawings

Figure 1 is a schematic diagram showing the organisation of a system in accordance with one embodiment of the invention, by way of example,
Figure 2 is a schematic diagram of the functional interconnections of the system of Figure 1,
Figure 3 is a flow chart showing a method of exchange of messages for selecting and communicating offers of services or products in accordance with an exemplary embodiment of the invention in operation of the system of Figure 1.
Figure 4 is a schematic diagram of the communications between a group of nodes and associated service offers in the system of Figure 1,
Figure 5 is a schematic diagram illustrating an example of a possible application of the method shown in Figures 1 to 4 to a negotiation in the context of the Agentcities deployment, using the FIPA specifications,
Figure 6 is a table indicating an example of exchanges of messages during the negotiation illustrated in Figure 5 with a first set of priorities of the user, and
Figure 7 is a table, similar to Figure 6 indicating an example of exchanges of messages during the negotiation illustrated in Figure 5 with a second set of priorities of the user.

### Detailed description of the preferred embodiments

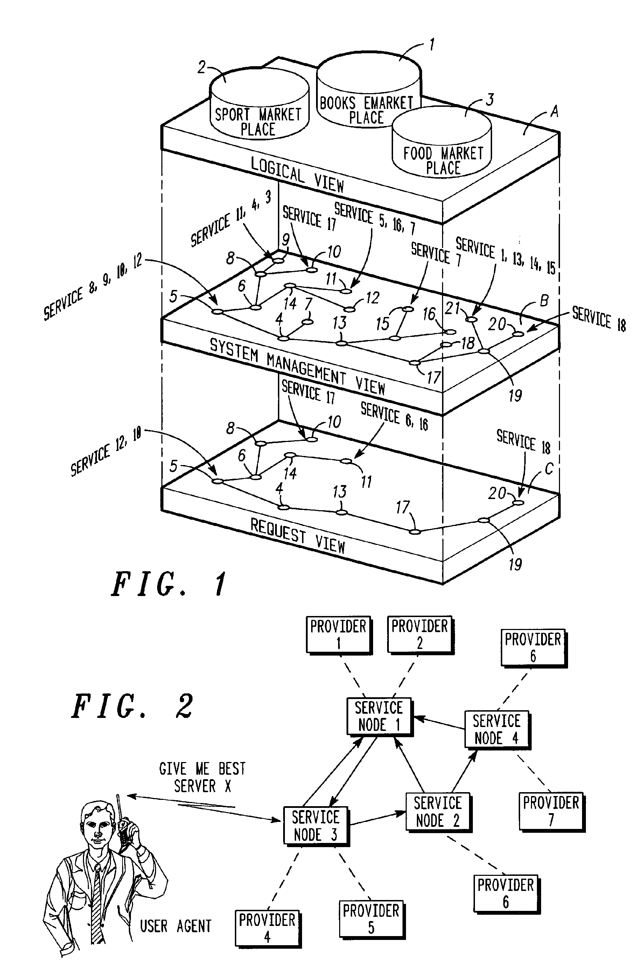

Figure 1 illustrates the general principles of a method of selecting and communicating offers of services or products in response to an interrogation in accordance with one embodiment of the present invention. From a logical point of view, offers of services and products are grouped into themes, illustrated here by way of example as 'Books Market Place' 1, 'Food Market Place' 2 and 'Sport Market Place' 3, as shown at A.

From a system management point of view, as shown at B, the system comprises a user access node 4 and service nodes 5 to 21. The service nodes 5 to 21 are linked to each other and to the user access node 4 in a tree, the linking being over the Internet in the preferred embodiment of the invention. Service providers register their different offers of services or products at one or more of the service nodes 5 to 21, the offers being represented in Figure 1 as service1 to service18. The registration of the different offers at each node preferably includes an indication of one or more market places of which the service or product is a member.

An interrogation of the system by the user is illustrated at C, which illustrates the view of a particular request concerning a product that primarily falls in the Book Market Place 1. It would of course be possible for this request to be forwarded to all of the nodes, with no reference to any tree structure, but this would lead to a heavy communication load on the network, especially where the number of service nodes is large, and a heavy requirement on the user access point 4 for evaluating and filtering the responses. In accordance with this embodiment of the invention, communication between the service nodes 5 to 21 is established by navigation among them according to an algorithm, described below, that selects the best service match or matches for the request and limits the propagation of messages concerning less interesting offers of services or products, the selected data being forwarded from one node to another towards the user access node 4.

The invention is particularly applicable in the context of deployment of the FIPA agents' platforms and services and, in particular, to the Agentcities network specification enabling distributed "negotiation" and will be described in this context, although the invention is also applicable in other contexts. By the expression "negotiation" is meant the formulation of a service request including defined criteria, the reception of responses in the form of offers, the evaluation of the offers and the selection of at least one among the closest matches to the request. The process of negotiation may be iterative.

In accordance with this embodiment of the invention, the negotiation is distributed, that is to say that the evaluation of offers of services and products as a function of the match to the user's request and the selection of the optimal offers is at least partially performed by the service nodes 5 to 21.

In more detail, when the user enters a request for a service or product, the request is matched dynamically relative to a logical definition; this requires the system to have a generally accepted ontology and semantics, understood by the user access nodes such as 4 and by the service nodes 5 to 21 and the service providers as well, which enable the nature of the request to be communicated and responses to be formulated.

The service offers service1 to service18 are represented by the corresponding ontology at the corresponding service nodes 5 to 21. Each node dynamically creates an explicit evaluation, which is communicated to the neighbouring nodes, that is to say, those of the nodes to which it is directly linked. This evaluation enables each node to filter not only its own registered service offers but also the responses from the neighbouring nodes as a function of the service request; decisions are taken at each service node whether the responses of a particular neighbour should be pursued for a given request. The application of this procedure using a structured logic for parsing enables a negotiation process, in particular, the elimination of irrelevant or sub-optimal offers at each node, with communication towards the user access node 4 of the best selected offer or offers only.

Additional offers of services or products can be added without reference to a central database by registering them at the corresponding service node 5 to 21 and the node infrastructure automatically will take account of the changed offers.

The nature of offers of services and products may include many different types of description and variables, of which the easiest to quantify is price; even the price may be a complex price based, for example, on the particular level of service that is requested. The presentation of selected offers to the user access node 4 may be followed by modification of the initial request, altering for example the priorities attached to different criteria in the request.
The entities involved in the process in terms of the FIPA and Agentcities specifications are:
1. Service Provider: Is responsible for answering and satisfying user service requests. The service provider responds to a service request by a call for proposal protocol.
2. Negotiation room: A logical link that can be considered at an abstract level as a model representing negotiation on service type. Negotiation rooms are defined according to services and negotiation protocol ontologies. If a service provider belongs to a negotiation room, it is assumed that it is able to understand the service and the negotiation protocol ontologies.
3. Service context nodes: Offers to services an interface to the whole system architecture and offers to users an interface to have the best service match dynamically.

The system may include several negotiation meeting rooms or ad hoc virtual negotiation meeting rooms, which enable service and product offers to be matched with user requests. Such an organisation favours dynamic best fit service match through the updating of the nodes and negotiation rooms by addition of new service and product offers and deletion or modification of existing ones and by changes in the utility function or the node link space, that is to say the nature of the evaluation of the services criteria to assess the optimum match.

Figure 2 illustrates an example of the functioning of the architecture of the negotiation room. In this example, only one dimension for the evaluation is considered, the price. The response of each provider can be seen as the result of a function given some entries. For example one book provider will answer for the following request: (quantity = "2", title = "Introduction to agents", payment = "visa") by $4 and another will answer for the same request by $3. So the second is said to be the best since it minimises cost, being the (sole) criterion used for negotiation.

The user wants the best service and the User Agent at the user access node 4 asks the nearest service node.

If the service node context has no information about the cost of the user request it launches a negotiation over registered services on it and forwards the request to its neighbours that are part of the negotiation room. The extent of the path along which the requests, and corresponding responses, are forwarded is preferably limited.

All services respond with their cost. The service node optimum cost is then the minimum of all costs registered at that node or, if the service is not registered at that node, a null value is returned.

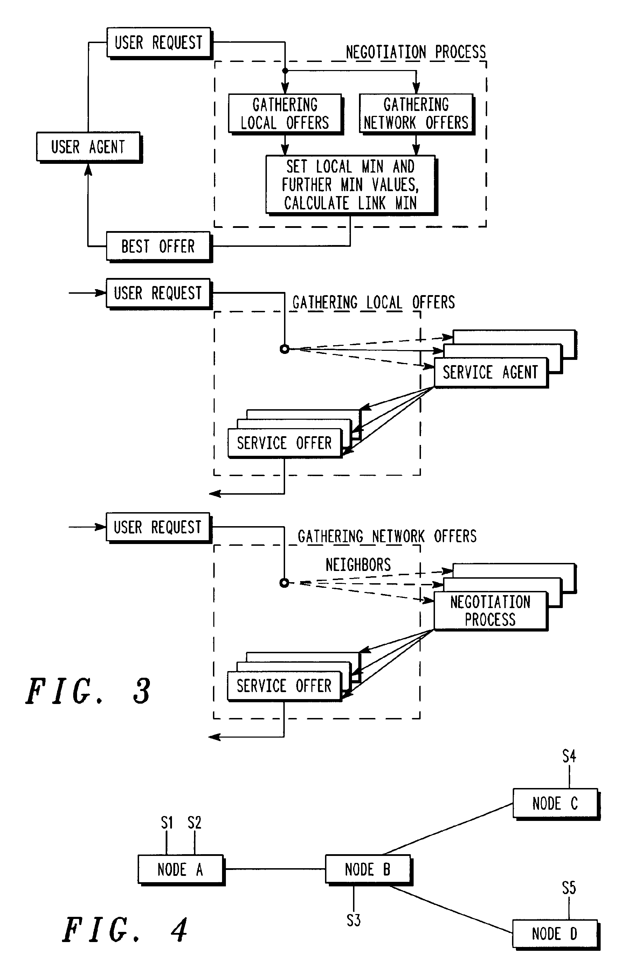

Still referring only to the price for a defined request to simplify the explanation, the optimum offers established in this way are then propagated within the network by communication between the nodes and calculation of the communicated responses to evaluate the offers, as shown in Figure 3. Each node having received a message from a preceding node defining the request for service X from the user, this request is forwarded to the neighbouring nodes, which are part of the negotiation room. Each node searches for services or products corresponding to the request among those registered locally in its database and selects those service offers that are relevant and that have the lowest cost or costs. Each node establishes a value, LocalMin, for the selected offer or offers, identifying the offer and the cost. The value of LocalMin is communicated to the neighbouring service nodes.

A further value, FurtherMin, is then calculated, selecting the optimum offer or offers between those in LocalMin of the node's own database and those values of LocalMin received from all neighbouring links directly connected to the node considered. The value of FurtherMin is communicated to all the neighbouring nodes.

Lastly, a value of LinkMin is calculated for each pair of neighbouring nodes, being the identification and value of the optimum offer or offers between the respective FurtherMin values.

For two service nodes N1 and N2, LinkMin(N1,N2) = Min(N1.FurtherMin, N2.FurtherMin).

These calculations are iterated to propagate the data from successive rings of neighbouring nodes. The number of iterations may be limited, especially where the negotiation room contains a large number of service nodes.

Figure 4 illustrates a simple example of a negotiation room comprising four nodes node A to node D and five offers of service S1 to S5, service offers S1 and S2 being registered at service node A, service offer S3 being registered at node B, service offer S4 being registered at node C and service offer S5 being registered at node D. Only services corresponding in nature to the user request are illustrated.

For the sake of example assume that the service offer cost values are as follows:

| | |
|---|---|
| S1 | 3 |
| S2 | 5 |
| S3 | 4 |
| S4 | 4 |
| S5 | 10 |

As an initial step, the LocalMin values for the service nodes are calculated and communicated to the neighbouring nodes as follows:

| Node | LocalMin |
|---|---|
| A | 3 |
| B | 4 |
| C | 4 |
| D | 10 |

In the next step, the FurtherMin values for the service nodes are calculated at each node and communicated to the neighbouring nodes as follows:

| Node | FurtherMin |
|---|---|
| A | 3 |
| B | 4 |
| C | 4 |
| D | 10 |

In the next step, the LinkMin values are calculated for each pair of connected nodes, as follows:

| Link | Cost |
|---|---|
| (A,B) | 3 |
| (B,D) | 4 |
| (B,C) | 4 |

Each node then updates the value of FurtherMin as a function of LinkMin and communicates FurtherMin to the neighbouring nodes, as follows.

| Node | FurtherMin |
|---|---|
| A | 3 |
| B | 3 |
| C | 4 |
| D | 4 |

The values of LinkMin are then updated by each node for each pair of connected nodes, as follows:

| Link | Cost |
|---|---|
| (A,B) | 3 |
| (B,D) | 3 |
| (B,C) | 3 |

And, in this simple example with only four nodes, the iterations are completed by the update of FurtherMin on node C and node D.

| Node | FurtherMin |
|---|---|
| A | 3 |
| B | 3 |
| C | 3 |
| D | 3 |

In this way, the system has selected the lowest cost service offer, being that of service offer S1, and this information is available at each of the nodes.

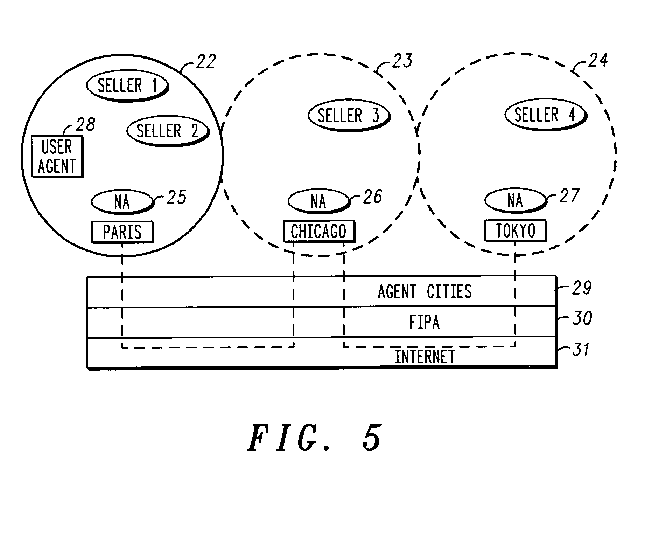

A preferred application of the method shown in Figure 3 1 to 4 to a negotiation in the context of the network of the Agentcities project is illustrated in Figures 5 to 7.

### System hypothesis:

- FIPA agents' platforms are linked following the FIPA and Agentcities specifications in a system as described with reference to Figures 1 to 4.
- A single "negotiation agent" handling the distributed negotiation is deployed on each Agentcities node (agent platform - the service nodes 5 to 21 of Figure 1).
- Service agents (Providers1 to Provider7 of Figure 2) aiming to participate in distributed negotiations are able *(i)* to find the local "negotiation agent" using FIPA mechanisms (Directory facilitator DF) and *(ii)* to register themselves and the services they offer (Service1 to Service18 of Figure 1) in the local "negotiation agent".
- "user agents" (the user access node 4 of Figure 1) handle each users' services requests, profile and preferences.

### System Description:

A. When a user requests a specific product/service, its corresponding user agent formulates a *"User service Request"(UReq)* and a *"User's Offers evaluation function" (UOev).* The *UOev* is expected to order a set of services offer to extract the best one regarding to the user's profile and preferences.
B. After formulation, the user agent submits the user request and offers the evaluation function to its local "negotiation agent".
C. The negotiation agent identifies the new *negotiation session* with a globally unique identifier (*GUID*) to avoid cyclic negotiation. He is said to be *the negotiation session owner.*
D. After identification, the negotiation agent submits the user service request to the relevant service agents, and forwards both user request and evaluation function to neighbours' negotiation agents present on the neighbours' agents' platforms.
E. When a negotiation agent receives a negotiation session from a colleague (another negotiation agent), he checks if he is already involved using the negotiation session *GUID.* If not, he stores the session *GUID* and executes phase D.
F. When the negotiation agent receives all the services' offers from its local services' agents and remote colleagues, he applies the evaluation function to select the best offer. If the negotiation session agent is not the owner he returns the selected offer to the requester agent otherwise the offer is returned to the user agent. If no offer is presented a special "null" value is returned.

### Concrete example: "Book buying"

### Consider a simple book buying e-commerce scenario.

Figure 5 presents an example of three Agentcities nodes 22, 23 and 24 situated at Paris, Chicago and Tokyo. The Paris node 22 is directly linked to the Chicago node 23, which is directly linked to the Tokyo node 24, so the cities network takes the form of a linked list Paris-Chicago and Chicago-Tokyo. On each platform a respective single negotiation agent (NA) entity 25, 26 and 27 is present. The booksellers' agents are deployed as following: Seller1 and Seller2 on the Paris node 22, seller3 on the Chicago node 23 and seller4 on the Tokyo node 24. A user agent 28 is present on the Paris node 22 and ready to receive book search requests.

The following table gives a simple example of the format of a book search request. It contains the book's title, the user actual location (city) and the language.

| Book search request | |
|---|---|
| Title | <book's title> |
| User location | <actual user location> |
| Language | <book language> |

The following table gives a simple example of the format of the description of an offer of the book, identified by its title, registered by a bookseller's agent. It contains the price, its availability, the delivery time and the cost of delivery

| Book service offer | |
|---|---|
| Price | <Book's price USD> |
| Availability | <Availability time> |
| Delivery time | <Delivery time> |
| Delivery cost | <Delivery cost> |

Messages are transmitted between the different entities as described above, transiting through the Agentcities layer 29, the FIPA layer 30 and the Internet 31.

As an example of the operation of the system, consider a simple user request for a book titled "Introduction to Agents", the user's language is "English" and the location is "Paris". The request and the evaluation function are sent to the Paris NA 22. The user agent 28 sets the evaluation function for the offers, that is to say, the criteria for judging the offers and the priorities among the criteria as follows:

| Title | "Introduction to Agents" |
|---|---|
| User location | Paris |
| Language | English |
| Priority 1 : language must match; | |
| Priority 2 : minimum price; | |
| Priority 3 :minimum delivery time. | |

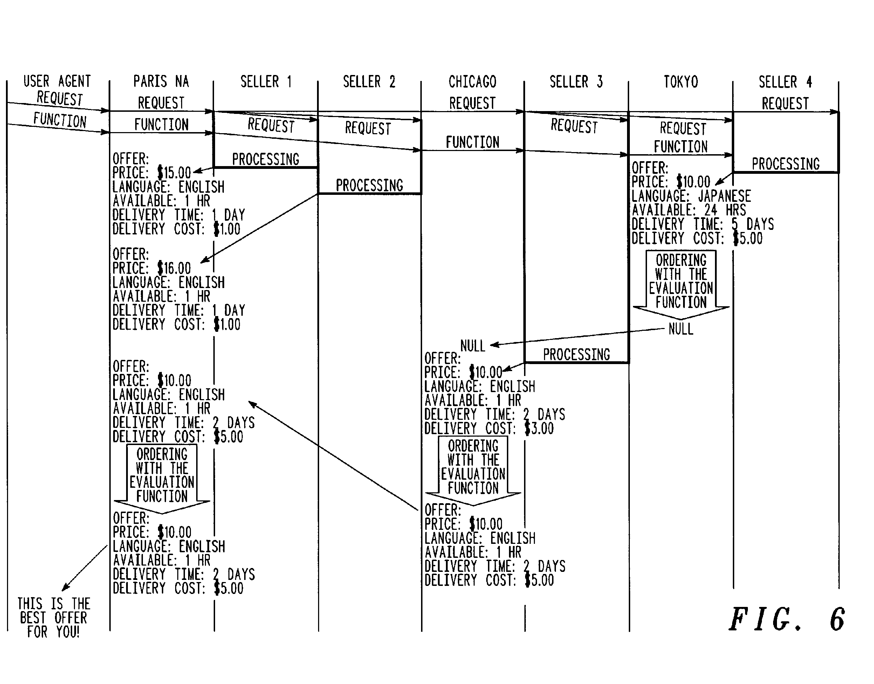

Responses by the booksellers agents with their offers are illustrated in Figure 6. The user receives the best offer proposed by Seller3 registered in Chicago. Note that the user' evaluation function has automatically filtered seller4's offer as a null value since it does not match a top priority condition on language value.

Suppose that the user gives a low priority to the price of the book but a higher priority to the delivery time. Its evaluation function would be:

| Title | "Introduction to Agents" |
|---|---|
| User location | Paris |
| Language | English |
| Priority 1 : language must match; | |
| Priority 2 : minimum delivery time; | |
| Priority 3 :minimum price. | |

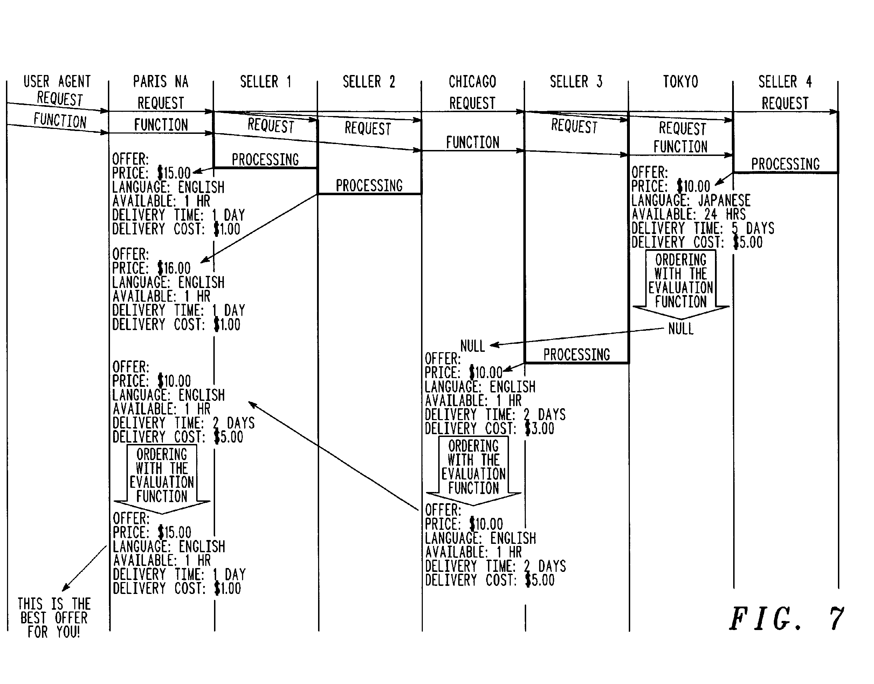

The corresponding execution flow is shown in Figure 7.

The distributed negotiation algorithm has effectively selected the offer of Seller2 which is more expensive but is delivered more quickly, corresponding to the user's new priorities.

## Claims

1. A method of selecting and communicating offers of services or products (Service1 to Service18, S1 to S5) in response to an interrogation in which data defining each of said offers is registered at at least one of a plurality of nodes (5 to 21) that are linked by a communication network (29, 30, 31), an interrogation message defining criteria for selection of the desired services or products is transmitted from a user station (4) over said network (29, 30, 31) to said nodes (5 to 21), responses of the nodes are filtered to select relevant offers matching at least partially the defined criteria for selection of the desired services or products and information concerning selected responses are transmitted to said user station,
**characterised in that** each of said nodes (5 to 21) filters any local offers that are registered at that node to select relevant local offers (LocalMin) matching at least partially the defined criteria for selection of the desired services or products, transmits selection result messages (FurtherMin) to second ones of said nodes (5 to 21) and receives selection result messages (FurtherMin) from third ones of said nodes (5 to 21), said selection result messages (FurtherMin) concerning both any selected local offers and any further offers selected by said third nodes.

2. A method as claimed in claim 1, wherein each of said nodes (5 to 21) selects between said local offers and said further offers at least one offer matching at least partially the defined criteria for selection of the desired services or products and said selection result message (FurtherMin) transmitted to said second nodes comprises information concerning the selection between said local offers and said further offers.

3. A method as claimed in claim 2, wherein said selection result message transmitted to said second nodes for each pair of said nodes that are in direct communication comprises information (LinkMin) concerning the value and identity of the offer or offers selected between said local offers and said further offers from that pair of nodes.

4. A method as claimed in any preceding claim, which is compliant with the specifications of the Foundation for Intelligent Physical Agents.

5. Apparatus for selecting and communicating offers of services or products (Service1 to Service18, S1 to S5) in response to an interrogation, comprising nodes (5 to 21) for registering data defining said offers, said nodes being linkable by a communication network (29, 30, 31), a user station (4) for transmitting an interrogation message defining criteria for selection of the desired services or products over said network (29, 30, 31) to said nodes (5 to 21), said apparatus being arranged to filter the responses of the nodes to select relevant offers matching at least partially the defined criteria for selection of the desired services or products and to transmit information concerning selected responses to said user station,
**characterised in that** each of said nodes (5 to 21) is arranged to filter any local offers that are registered at that node to select relevant local offers (LocalMin) matching at least partially the defined criteria for selection of the desired services or products, to transmit selection result messages (FurtherMin) to second ones of said nodes (5 to 21) and to receive selection result messages (FurtherMin) from third ones of said nodes (5 to 21), said selection result messages (FurtherMin) concerning both any selected local offers and any further offers selected by said third nodes.

6. Apparatus as claimed in claim 5, wherein each of said nodes (5 to 21) is arranged to select between said local offers and said further offers at least one offer matching at least partially the defined criteria for selection of the desired services or products, said selection result message (FurtherMin) transmitted to said second nodes comprising information concerning the selection between said local offers and said further offers.

7. Apparatus as claimed in claim 6, wherein said selection result message transmitted to said second nodes for each pair of said nodes that are in direct communication are arranged to comprise information (LinkMin) concerning the value and identity of the offer or offers selected between said local offers and said further offers from that pair of nodes.

8. Apparatus as claimed in any of claims 5 to 7, which is compliant with the specifications of the Foundation for Intelligent Physical Agents.
